(19) **Europäisches Patentamt**

**European Patent Office**

**Office européen des brevets**

(11) **EP 1 242 970 B1**

(12) **FASCICULE DE BREVET EUROPEEN**

(45) Date de publication et mention
de la délivrance du brevet:
**17.05.2006 Bulletin 2006/20**

(51) Int Cl.:
***G06K 19/077*** *(2006.01)*

(21) Numéro de dépôt: **00981463.3**

(86) Numéro de dépôt international:
**PCT/FR2000/003284**

(22) Date de dépôt: **24.11.2000**

(87) Numéro de publication internationale:
**WO 2001/041059 (07.06.2001 Gazette 2001/23)**

(54) **PROCEDE DE REALISATION D'UN CIRCUIT OSCILLANT ACCORDE POUR DES ETIQUETTES RADIOELECTRIQUES**

METHODE ZUR HERSTELLUNG EINES ABGESTIMMTEN OSZILLIERENDEN KREISLAUFS FÜR RADIOELEKTRONISCHE MARKIERUNGEN

METHOD FOR PRODUCING A TUNED OSCILLATING CIRCUIT FOR RADIOELECTRIC TAGS

(84) Etats contractants désignés:
**AT BE CH CY DE DK ES FI FR GB GR IE IT LI LU MC NL PT SE TR**

(30) Priorité: **01.12.1999 FR 9915165**

(43) Date de publication de la demande:
**25.09.2002 Bulletin 2002/39**

(73) Titulaires:
- **GEMPLUS**
  **13881 Gémenos Cedex (FR)**
- **D'Annunzio, Franck**
  **13600 La Ciotat (FR)**
- **Martin, Philippe**
  **21200 Beaune (FR)**

(72) Inventeurs:
- **D'ANNUNZIO, Franck**
  **F-13600 La Ciotat (FR)**
- **MARTIN, Philippe**
  **F-21200 Beaune (FR)**

(74) Mandataire: **Scheer, Luc**
**GEMPLUS**
**Département de Propriété Industrielle**
**Parc d'activités de Gémenos**
**BP 100**
**13881 Gémenos Cedex (FR)**

(56) Documents cités:
| EP-A- 0 545 910 | WO-A-86/04172 |
| DE-A- 19 723 847 | DE-C- 19 758 057 |
| FR-A- 2 762 140 | FR-A- 2 769 108 |

## Description

L'invention concerne un procédé de réalisation d'un circuit oscillant accordé.

Elle concerne également la fabrication de dispositifs radioélectriques de faibles dimensions comme par exemple les étiquettes électroniques d'identification dénommées également « tags » ou de cartes à puce munies d'une antenne radioélectrique. Pour simplifier, on parlera dans la suite de cartes sans contact pour dénommer les cartes à puce comportant une telle antenne en précisant que l'invention s'applique également aux cartes à puce à fonctionnement mixte (avec contact et sans contact)

On rappelle que les circuits résonants ou circuits oscillants sont très utilisés en technique radio. Ils permettent de coupler de manière sélective des étages d'amplification, c'est-à-dire de ne fonctionner de manière optimale qu'autour d'une bande de fréquence très étroite.

Le spectre utilisable en radiofréquence étant fini (de quelque 100 kHz à 100 GHz) et le nombre limité de canaux utiles vu le nombre d'utilisations (télévision, téléphonie, communication satellite, balise) les circuits accordé résonant à une -valeur précise de fréquence permettent un fonctionnement sélectif. Plus les bandes de fréquence sont étroites plus le nombre de canaux est élevé mais plus la sélectivité est difficile à mettre en oeuvre.

On rappelle en outre que le circuit électrique le plus utilisé pour réaliser un circuit oscillant consiste à connecter une inductance à une capacité en série ou en parallèle. La fréquence de résonance étant donnée par la relation

$$Fr=1/2\pi TLC,$$

Si L est la valeur de l'inductance et C la valeur de la capacité du circuit.

Un bon circuit résonant a un facteur de qualité élevé permettant un bon transfert d'énergie entre une antenne émettrice et une antenne réceptrice qu'il s'agisse d'une étiquette électronique ou « TAG » ou de tout autre dispositif de réception radioélectrique.

Le couplage entre l'étiquette électronique et l'antenne d'émission réception doit être optimisé afin d'avoir une distance de communication la plus élevée possible. Cette optimisation implique une fréquence de résonance très précise la plus proche possible de celle de la fréquence du récepteur.

Une application importante de tels circuits accordés couplés est celle de l'identification sans contact par radiofréquence. Les circuits accordés sont utilisés donc en communication radiofréquence comme antennes d'émission et de réception et ce dans le spectre des fréquences en dessous de 30 MHz, notamment dans les bandes de fréquence I.S.M. à 125 kHz et 13,56 MHz.

A ces fréquences basses, le couplage entre la station de base ou lecteur et l'étiquette électronique ou carte sans contact ou « TAG » se fait par l'intermédiaire du champ magnétique. Le système fonctionne comme un transformateur dont le circuit magnétique serait à air. Afin que la distance de communication soit la plus élevée possible, pour une puissance d'émission et une sensibilité de réception donnée, les facteurs de qualité des deux circuits résonants couplés doivent être les plus élevés possible, de même que leur fréquence de résonance respective doit être la plus proche possible l'une de l'autre. A cette fin, on procède en général à un ajustage de la fréquence d'accord d'un circuit oscillant en particulier du circuit récepteur.

Il est bien évident que, afin d'éviter d'avoir un tel ajustage le procédé de fabrication peut garantir une tolérance faible donc une précision élevée pour chacun des éléments constituant le circuit oscillant inductance et capacité.

On peut aussi équiper le circuit d'un réglage automatisé ou non lors de la production ou en phase de test en agissant sur l'un des deux éléments du circuit.

La solution varie selon le coût de fabrication envisagé. Et bien sûr, des applications dans laquelle entrent ces dispositifs.

Dans le domaine des dispositifs radioélectriques du type étiquettes électroniques ou cartes à puce sans contact il est bien évident que le coût de fabrication des circuits oscillants doit rester le plus faible possible.

La fabrication de l'antenne d'émission réception côté lecteur nécessite le réglage d'au moins une capacité réglable à vis, voire même parfois deux, ce réglage est exécuté manuellement par un opérateur à l'aide d'un banc de réglage spécifique. Les quantités en jeu ainsi que le prix de vente du produit, c'est à dire du lecteur, peuvent justifier de mettre en place une telle solution. A l'inverse, ce qui est le cas des cartes sans contact et des étiquettes électroniques, les coûts de fabrication ainsi que les quantités élevées ne permettent pas d'envisager une solution avec un élément réglable mécaniquement. La solution industrielle classique retenue jusqu'à présent a été de relâcher les tolérances sur l'inductance et la capacité du circuit résonant en abaissant le facteur de qualité. Ainsi une erreur absolue sur la fréquence traduira une perte relative de performance faible. Cette variation plus faible des performances en fonction de la fréquence d'accord se traduit aussi par des performances moindres.

Cette solution à performances dégradées conduit tout de même à des taux de rebut élevés, abaissant les rendements dès qu'un lot d'inductance ou de capacité est accidentellement livré hors spécification.

La solution retenue jusqu'à présent pour les étiquettes électroniques haute performance (circuit résonant faiblement amorti) a été d'utiliser des antennes gravées réputées stables et dont la valeur d'inductance est reproductible d'un lot à l'autre. Considérant cette valeur comme quasi-constante, la précision absolue de la fréquence de résonance ne dépend plus que de la valeur de capacité du circuit. Les capacités discrètes disponibles sur le marché ne permettant d'atteindre une reproductibilité suffisante, la solution de la capacité dans la partie intégrée de l'étiquette permet d'atteindre une précision suffisante. Par contre, le coût de la puce est élevé car la part de silicium réservée à la capacité peut représenter jusqu'à trente pour cent de la surface totale, réduisant donc le nombre de-puce par tranche de silicium. De plus, les tests sur les tolérances et la qualité de la capacité intégrée, voire le réglage par laser de la valeur, peut représenter une part importante du coût de fabrication de la puce.

Le brevet US 4142674 A décrit un procédé de réalisation d'un circuit oscillant comprenant au moins une inductance connectée à une pluralité de capacités ramifiées à l'extrémité et le long de l'inductance. Le procédé comprend une étape de réglage de l'accord en fréquence consistant à diminuer simultanément l'inductance et la capacité en sectionnant par retrait de matière une extrémité de l'inductance avec moins une capacité ramifiée. Le brevet FR-A-2 769 108 décrit un procédé de fabrication d'étiquette électronique souple dans lequel il est prévu un ajustage de la capacité d'accord par réduction de surface par enlèvement de matière (laser, sablage, découpe...), ou par procédé électrique, ou radioélectrique (fusible).

Les étiquettes électroniques du genre antivol dans les magasins ont des contraintes de coût très élevé. Elles ne comportent pas de circuit intégré spécifique car la fonctionnalité est réduite à sa plus simple expression : accordée l'étiquette absorbe de l'énergie, désaccordée elle n'influe plus sur le champ du système de détection (cas de l'article avec la fonction antivol désarmée). De telles étiquettes sont produites en grande quantité, les deux éléments du circuit d'accord sont imprimés sur un même film. L'inductance est une spirale plane connectée à une capacité composée par deux surfaces métallisées en vis à vis avec le film comme diélectrique. Le support étant fin et la gravure grossière, vu les coûts très faibles de fabrication, la valeur de la fréquence de résonance varie beaucoup d'un lot de fabrication à un autre. La faible précision sur la capacité et l'inductance ainsi produites conduit à utiliser des systèmes à fréquence variable qui ne permet pas de communiquer par modulation du champ en y ajoutant une puce comportant une mémoire programmable et/ou un microprocesseur.

La présente invention permet de remédier à ce problème. La solution apportée par l'invention s'applique à tout dispositif oscillant réalisé sur un support diélectrique.

La présente invention concerne un procédé de réalisation d'un circuit oscillant accordé permettant la fabrication à bas coût de dispositifs radioélectriques de faibles dimensions comme des étiquettes électroniques d'identification ou des cartes à puces munies d'une antenne.

L'invention a donc plus particulièrement pour objet un procédé de réalisation d'un circuit oscillant conforme aux revendications 1 à 9.

L'invention concerne également un procédé de fabrication d'un dispositif radioélectrique de faibles dimensions conforme aux revendications 10 à 13.

D'autres particularités et avantages de l'invention apparaîtront à la lecture de la description ci-après qui est donnée à titre illustratif et non limitatif et en regard des dessins annexés sur lesquels :

- la figure 1 représente le schéma d'une étiquette électronique,
- la figure 2 représente le schéma des armatures d'une capacité imprimée sur un support diélectrique avec la liaison électrique entre cette armature et l'inductance,
- la figure 3 représente un premier mode de réalisation du procédé permettant d'augmenter l'inductance,
- la figure 4 représente un mode de réalisation du procédé permettant d'une part d'augmenter l'inductance et d'autre part de diminuer la capacité,
- la figure 5 représente un mode de réalisation du procédé permettant d'une part d'augmenter l'inductance et d'autre part d'augmenter la capacité.

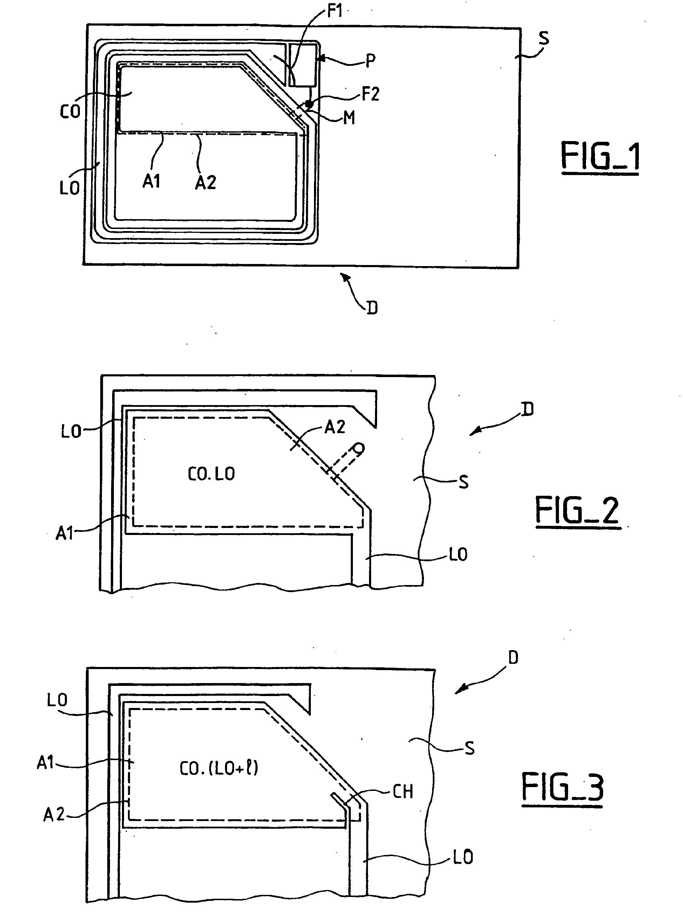

La figure 1 illustre de façon schématique les différents éléments d'une étiquette-électronique D. Les éléments formant le circuit oscillant ou antenne de l'étiquette sont constitués par une inductance L0 reliée électriquement par une extrémité à une armature A1 (supérieure sur le schéma) d'une capacité C0 et par l'autre extrémité à la deuxième armature A2 (inférieure sur le schéma) de cette capacité. Le support est un support isolant diélectrique référencé S, il s'agit par exemple d'un film diélectrique que l'on retrouve tout aussi bien dans la fabrication d'une étiquette électronique que dans celle d'une carte à puce sans contact.

Les éléments du circuit oscillant sont réalisés de manière classique par toute technique d'impression de matière conductrice (gravure, jet d'encre conductrice) permettant de réaliser une inductance sous la forme d'une spirale plane connectée à une capacité composée de deux surfaces métallisées en vis à vis sur un support diélectrique ou film diélectrique. L'étiquette qui est illustrée sur ce schéma comporte en outre une puce électronique P connectée aux deux bornes d'entrée du circuit oscillant. Pour réaliser cette connexion, il est bien évident qu'une borne de connexion de la puce électronique est connectée par un premier fil F1 à une borne de connexion du circuit oscillant, cette borne étant située sur une face du support et à une deuxième borne du circuit oscillant qui est ramenée sur cette même face par une métallisation M traversant le support S.

La figure 2 représente le détail d'une configuration d'origine d'un circuit oscillant réalisé sur un support S. Il s'agit là bien sûr d'une représentation schématisée. On voit donc de façon précise l'armature supérieure de la capacité et, tracée en pointillés, l'armature inférieure de cette capacité portant la référence A2, ainsi que la liaison électrique entre l'armature A1 et la zone de liaison avec l'inductance L0, cette liaison correspondant tout simplement à une continuité de la métallisation formant l'inductance vers une zone élargie formant la surface métallique de l'armature A1.

Le procédé selon l'invention permet par rapport à une configuration d'origine définie telle que représentée sur cette figure 2 d'ajuster la fréquence d'accord du circuit de façon automatisée en cours donc de fabrication en effectuant un retrait et/ou un ajout de matière conductrice.

En effet l'ajustage de la fréquence d'accord peut être réalisé de différentes façons en combinant les solutions qui vont être décrites dans la suite.

Un premier mode de réalisation selon le procédé consiste donc à retirer de la matière conductrice. Selon un exemple de réalisation illustré par le schéma de la figure 3, on peut découper un chenal CH dans l'armature A1 de la capacité, ce qui aura pour conséquence d'augmenter la valeur de l'inductance L0 tout en gardant la même valeur de capacité à la surface de découpe prés.

Ainsi, si C0 est la valeur de la capacité d'origine (figure 2) cette capacité est inchangée, elle reste égale à C0 tandis que la valeur de l'inductance L0 passe à une valeur supérieure à L0 + 1.

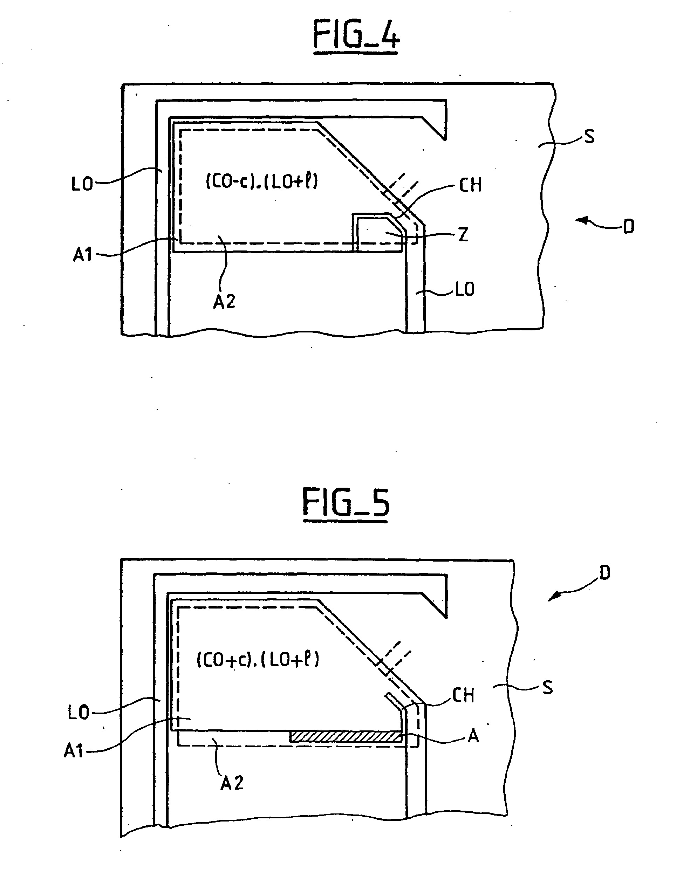

Le retrait de matière peut être fait de manière à simultanément augmenter l'inductance tout en abaissant la capacité d'accord et ceci en isolant une partie Z de l'une des armatures du condensateur sur le film diélectrique S. On réduit ainsi la capacité tout en augmentant l'inductance. Ce mode de réalisation est illustré par le schéma de la figure 4. Il permet d'ajuster la fréquence de résonance plus finement qu'en jouant seulement sur un des deux paramètres du circuit.

Selon un autre mode de réalisation du procédé conforme à l'invention, le réglage de la fréquence d'accord peut également être fait par ajout de matière conductrice.

On peut bien évidemment combiner l'ajout et le retrait de matière. Cette fois, on jouera simultanément sur un ajout de matière pour augmenter la capacité par apport de matière tout en augmentant l'inductance en retirant de la matière, créant ainsi un chenal tel qu'il a été décrit à propos de la figure 3. Afin que cet apport de matière puisse effectivement induire une augmentation de capacité, il faut que l'armature non-modifiée soit beaucoup plus large que l'armature modifiée. On peut se reporter pour mieux comprendre cette opération au schéma de la figure 5. On voit sur ce schéma que l'armature de la face supérieure de la capacité c'est à dire l'armature portant la référence A1 est à l'origine plus petite que l'armature de la face arrière, c'est à dire l'armature A2.

Ainsi, par une opération d'ajout de matière on pourra apporter de la matière conductrice de manière à élargir la surface métallisée de l'armature à A2, cet élargissement correspond à la zone A sur cette figure 5. On voit ainsi que la combinaison des deux opérations c'est à dire une combinaison de retrait de matière en créant le chenal CH et d'ajout de matière en apportant de la matière dans la zone A permet à la fois d'augmenter la capacité d'origine C0 et d'augmenter l'inductance d'origine L0, ces deux éléments passant d'une valeur C0 à C0 + C et de L0 à L0 + 1.

Le retrait de matière peut être effectué selon différentes techniques. La techniques qui semble la plus rapide et la plus précise est l'utilisation d'un faisceau laser. L'énergie et la durée de l'émission du faisceau seront choisies de manière à ne pas transpercer le diélectrique S tout en isolant bien la surface désirée. L'optique sera aussi adaptée de manière à avoir un faisceau suffisamment large pour assurer une découpe tout en procurant une isolation électrique. Cette largeur devra être de l'ordre de l'épaisseur du conducteur à découper.

On peut également envisager une technique de découpe telle que la technique de micro sablage. Le critère de sélection dépendra de la surface minimale requise pour un ajustement fin, qui pour des produits du type « étiquettes électroniques » peut être de l'ordre de quelques millimètres carrés.

L'ajout de matière peut être effectué en utilisant la technique de jet de matière conductrice que l'on utilise notamment dans la fabrication des cartes à puce. Les matières conductrices sont généralement des encres conductrices. Une autre solution industrielle, utilisée pour la fabrication de condensateurs est l'utilisation d'une technique d'évaporation de métal sur diélectrique.

On peut ainsi combiner les deux techniques différentes sur un même équipement industriel, cet équipement comportera alors des moyens de découpe afin de créer un chenal isolant jouant sur l'inductance et un système d'apport de matière tel que le jet d'encre conductrice afin d'augmenter la capacité du circuit résonant. L'un des deux systèmes sera mis en fonction suivant le résultat du contrôle initial en réception du film ou par la machine elle-même en mesurant auparavant les étiquettes individuellement.

Chaque lot de films diélectriques sur lequel auront été réalisés des circuits résonants fera l'objet au préalable de mesures en phase de contrôle qualité en entrée du circuit de fabrication des étiquettes électronique et/ou carte à puce sans contact.

Suivant la valeur médiane représentative du lot par exemple, un système informatisé sera apte à calculer la trajectoire de découpe appropriée pour tout le lot. Soit une augmentation d'inductance par découpe d'un chenal (réduction de la fréquence d'accord) soit le retrait d'une surface pour diminuer la capacité (augmentation de la fréquence d'accord) sera mis en oeuvre en fonction des résultats du calculateur. Si la fréquence d'accord du lot est beaucoup trop élevée, on pourra simultanément ajouter de la matière conductrice (augmentation de la capacité) et découper un chenal isolant (augmentation de l'inductance) afin de réduire la fréquence d'accord à sa valeur nominale. Cette action peut très bien être étendue à chaque étiquette afin d'optimiser les performances du produit. Alors la mesure de la fréquence d'accord devra être exécutée par la machine elle-même ainsi que le choix de la méthode d'ajustage et ainsi que le calcul de la trajectoire des outils de découpe ou ajout de matière.

## Revendications

1. Procédé de réalisation d'un circuit oscillant comprenant au moins, une inductance (L0) connectée à une capacité (C0), les deux éléments étant formés à partir d'une matière conductrice déposée sur support diélectrique, ledit procédé comprenant une étape de réglage de l'accord en fréquence dudit circuit obtenue par retrait et/ou ajout de matière conductrice à la matière conductrice présente, **caractérisé en ce que** le retrait de matière conductrice comprend la découpe d'un chenal (CH) dans la région de connexion de l'inductance à une armature (A1) de la capacité de manière à augmenter la valeur de ladite inductance de façon désirée.

2. Procédé de réalisation d'un circuit oscillant comprenant au moins, une inductance (L0) connectée à une capacité (C0), les deux éléments étant formés à partir d'une matière conductrice déposée sur support diélectrique, ledit procédé comprenant une étape de réglage de l'accord en fréquence dudit circuit obtenue par retrait et/ou ajout de matière conductrice à la matière conductrice présente, **caractérisé en ce que** le retrait de matière conductrice comprend une découpe de matière conductrice sur une armature de la capacité autour d'une surface déterminée (Z), dans la région de connexion de l'inductance à cette armature pour augmenter la valeur de l'inductance et diminuer celle de la capacité.

3. Procédé de réalisation d'un circuit oscillant comprenant au moins, une inductance (L0) connectée à une capacité (C0), les deux éléments étant formés à partir d'une matière conductrice déposée sur support diélectrique, ledit procédé comprenant une étape de réglage de l'accord en fréquence dudit circuit obtenue par retrait et/ou ajout de matière conductrice à la matière conductrice présente, **caractérisé en ce que** l'ajout de matière conductrice consiste à effectuer un apport de matière conductrice sur l'une des armatures de la capacité qui initialement couvrait une superficie du support diélectrique inférieure à l'autre armature, de manière à augmenter cette superficie et à augmenter ainsi la valeur de ladite capacité.

4. Procédé de réalisation d'un circuit oscillant comprenant au moins, une inductance (L0) connectée à une capacité (C0), les deux éléments étant formés à partir d'une matière conductrice déposée sur support diélectrique, ledit procédé comprenant une étape de réglage de l'accord en fréquence dudit circuit obtenue par retrait et/ou ajout de matière conductrice à la matière conductrice présente, **caractérisé en ce que** l'ajout et le retrait de matière conductrice consistent à effectuer respectivement, un apport de matière conductrice sur l'une des armatures (A1) de la capacité qui initialement couvrait une superficie du support diélectrique inférieure à l'autre armature (A2), de manière à augmenter cette superficie et, la découpe d'un chenal (CH) dans la région de connexion de l'inductance à une armature (A1) de la capacité de manière à augmenter la valeur de ladite inductance de façon désirée.

5. Procédé de réalisation d'un circuit oscillant selon l'une quelconque des revendications précédentes, **caractérisé en ce que** l'ajout de matière est réalisé par une technique de jet de matière conductrice.

6. Procédé de réalisation d'un circuit oscillant selon la revendication 5, **caractérisé en ce que** la matière conductrice est une encre conductrice.

7. Procédé de réalisation d'un circuit oscillant selon l'une quelconque des revendications précédentes, **caractérisé en ce que** l'ajout de matière est réalisé par une technique d'évaporation de métal.

8. Procédé de réalisation d'un circuit oscillant selon l'une quelconque des revendications précédentes, **caractérisé en ce que** le retrait de matière est réalisé par faisceau laser.

9. Procédé de réalisation d'un circuit oscillant selon l'une quelconque des revendications précédentes, **caractérisé en ce que** le retrait de matière est réalisé par micro sablage.

10. Procédé de fabrication d'un dispositif radioélectrique de faibles dimensions (D) comprenant une étape de réalisation d'un circuit oscillant **caractérisé en ce que** cette étape est mise en oeuvre conformément au procédé selon l'une quelconque des revendications précédentes.

11. Procédé de fabrication d'un dispositif radioélectrique de faibles dimensions selon la revendication 10, **caractérisé en ce que** le dispositif (D) est une carte à puce sans contact.

12. Procédé de fabrication d'un dispositif radioélectrique de faibles dimensions selon la revendication 10, **caractérisé en ce que** le dispositif (D) est une étiquette électronique.

13. Procédé de fabrication en masse d'un dispositif radioélectrique de faibles dimensions selon les revendications 11 ou 12, **caractérisé en ce qu'** il comprend une étape de test consistant à effectuer une ou plusieurs mesures de la fréquence d'accord du circuit oscillant par lot de fabrication pour déterminer le réglage à effectuer pour la mise en place dans le dispositif.

## Claims

1. A method for producing an oscillating circuit comprising at least, one inductance (L0) connected to a capacitance (CO), both elements being made of conductive material placed on a dielectric substrate, the said method comprising a stage of adjustment of the tuning frequency of the said circuit obtained by removal and/or addition of conductive material to the conductive material present **characterised in that** the removal of conductive material comprises the cutting of a channel (CH) in the region of the connection of the inductance to a plate (A1) of the capacitance so as to increase the value of the said inductance' as required.

2. A method for producing an oscillating circuit comprising at least, one inductance (L0) connected to a capacitance (CO), both elements being made of conductive material placed on a dielectric substrate, the said method comprising a stage of adjustment of the tuning frequency of the said circuit obtained by removal and/or addition of conductive material to the conductive material present **characterised in that** the removal of conductive material consists in cutting the conductive material on a plate of the capacitance around a determined surface (z), in the region of the connection of the inductance to this plate to increase the value of the inductance and reduce that of the capacitance.

3. A method for producing an oscillating circuit comprising at least, one inductance (L0) connected to a capacitance (CO), both elements being made of conductive material placed on a dielectric substrate, the said method comprising a stage of adjustment of the tuning frequency of the said circuit obtained by removal and/or addition of conductive material to the conductive material present **characterised in that** the addition of conductive material consists in carrying out an addition of conductive material on one of the plates of the capacitance which initially covered a smaller surface area of the dielectric substrate than that of the other plate, so as to increase this surface area and thus to increase the value of the said capacitance.

4. A method for producing an oscillating circuit comprising at least, one inductance (L0) connected to a capacitance (C0), both elements being made of conductive material placed on a dielectric substrate, the said method comprising a stage of adjustment of the tuning frequency of the said circuit obtained by removal and/or addition of conductive material to the conductive material present **characterised in that** the addition and removal of conductive material consists in carrying out respectively, an addition of conductive matter onto one of the plates (A1) of the capacitance which initially covered smaller surface area of the dielectric substrate than the other plate (A2), so as to increase this surface area and, the cutting of a channel (CH) in the region of the connection of the inductance to a plate (A1) of the capacitance so as to increase the value of the said inductance as required.

5. A method an oscillating circuit according to any one of the preceding claims, **characterised in that** the addition of material is carried out by a technique of a jet of conductive material.

6. A method for producing an oscillating circuit according to claim 5, **characterised in that** the conductive material is a conductive ink.

7. A method for producing an oscillating circuit according any one of the preceding claims, **characterised in that** the addition of material is achieved by a metal evaporation technique.

8. A method for producing an oscillating circuit according to any one of the preceding claims, **characterised in that** the removal of material is achieved by laser beam.

9. A method for producing an oscillating circuit according to any one of the preceding claims, **characterised in that** the removal of material is achieved by micro sand-blasting.

10. A method for manufacturing a small wireless device (D) comprising a step of producing an oscillating circuit **characterised in that** this step is achieved in compliance with the method according to any one of the preceding claims.

11. A method for manufacturing a small wireless device according to claim 10, **characterised in that** the device (D) is a contact less smart card.

12. A method for manufacturing of a small wireless device according to claim 10, **characterised in that** the device (D) is an RFID tag.

13. A method for manufacturing in large quantities a small wireless device according to claims 11 or 12, **characterised in that** it comprises a test step consisting in carrying out one or several measurement (s) of the tuning frequency of the oscillating circuit per manufacturing batch in order to determine the adjustment to be carried out prior to the fitting in the device.

**Patentansprüche**

1. Verfahren für die Herstellung eines Schwingkreises, der zumindest eine an eine Kapazität (C0) angeschlossene Induktanz (L0) umfasst, wobei die beiden Elemente aus leitfähigem Material geformt werden, das auf einem dielektrischen Träger aufgetragen wurde, wobei besagtes Verfahren eine Phase der Einstellung der Frequenzabstimmung besagten Kreises umfasst, welche durch Entnahme und/oder Hinzufügen von leitfähigem Material zum vorhandenen leitfähigem Material erhalten wird, **dadurch gekennzeichnet, dass** die Entfernung von leitfähigem Material das Schneiden einer Rinne (CH) in der Nähe des Anschlusses der Induktanz an eine Bewehrung (A) der Kapazität umfasst, so dass der Wert der besagten Induktanz auf die gewünschte Art und Weise erhöht wird.

2. Verfahren für die Herstellung eines Schwingkreises, der' zumindest eine an eine Kapazität (C0) angeschlossene Induktanz (L0) umfasst, wobei die beiden Elemente aus leitfähigem Material geformt werden, das auf einem dielektrischen Träger aufgetragen wurde, wobei besagtes Verfahren eine Phase der Einstellung der Frequenzabstimmung besagten Kreises umfasst, welche durch Entnahme und/oder Hinzufügen von leitfähigem Material zum vorhandenen leitfähigem Material erhalten wird, **dadurch gekennzeichnet, dass** das Entfernen von leitfähigem Material ein Ausschneiden des leitfähigen Materials auf einer Bewehrung der Kapazität um eine bestimmte Fläche (Z) umfasst, dort, wo die Induktanz an diese Bewehrung angeschlossen ist, um den Wert der Induktanz zu erhöhen und den der Kapazität zu verringern.

3. Verfahren für die Herstellung eines Schwingkreises, der zumindest eine an eine Kapazität (C0) angeschlossene Induktanz (L0) umfasst, wobei die beiden Elemente aus einem leitfähigem Material geformt werden, das auf einem dielektrischen Träger aufgetragen wurde, wobei besagtes Verfahren eine Phase der Einstellung der Frequenzabstimmung besagten Kreises umfasst, welche durch Entnahme und/oder Hinzufügen von leitfähigem Material zum vorhandenen leitfähigen Material erhalten wird, **dadurch gekennzeichnet dass** das Hinzufügen von leitfähigem Material darin besteht, leitfähiges Material auf einer der Bewehrungen der Kapazität hinzuzufügen, die ursprünglich eine Fläche des dielektrischen Trägers bedeckte, die kleiner ist, als die Fläche der anderen Bewehrung, so dass diese Fläche vergrößert und somit der Wert der besagten Kapazität vergrößert wird.

4. Verfahren für die Herstellung eines Schwingkreises, der zumindest eine, an eine Kapazität (C0) angeschlossene Induktanz (L0) umfasst, wobei die beiden Elemente aus einem leitfähigem Material geformt werden, das auf einem dielektrischen Träger aufgetragen wurde, wobei besagtes Verfahren eine Phase der Einstellung der Frequenzabstimmung besagten Kreises umfasst, welche durch Entnahme und/oder Hinzufügen von leitfähigem Material zum vorhandenen leitfähigem Material erhalten wird, **dadurch gekennzeichnet, dass** das Hinzufügen und das Entfernen von leitfähigem Material darin besteht, jeweils leitfähiges Material auf den Bewehrungen (A1) der Kapazität hinzuzufügen, die ursprünglich eine Fläche des dielektrischen Trägers bedeckten, die kleiner war als die Fläche der anderen Bewehrung (A2), so dass diese Fläche vergrößert wird, eine Rinne (CH) in der Nähe des Anschlusses der Induktanz an eine Bewehrung (A1) der Kapazität zu schneiden, so dass der Wert der besagten Induktanz in der gewünschten Art und Weise erhöht wird.

5. Verfahren zur Herstellung eines Schwingkreises nach einer der vorhergehenden Patentansprüche, **dadurch gekennzeichnet, dass** die Materialzugabe durch Aufstrahlen von leitfähigem Material erfolgt.

6. Verfahren zur Herstellung eines Schwingkreises nach Anspruch 5, **dadurch gekennzeichnet, dass** das leitfähige Material leitfähige Druckfarbe ist.

7. Verfahren zur Herstellung eines Schwingkreises nach einem der vorhergehenden Ansprüche, **dadurch gekennzeichnet dass** das Material durch eine Metallverdampfungstechnik hinzugefügt wird.

8. Verfahren zur Herstellung eines Schwingkreises nach einer der vorhergehenden Ansprüche, **dadurch gekennzeichnet, dass** die Entnahme von Material per Laserstrahl erfolgt.

9. Verfahren zur Herstellung eines Schwingkreises nach einem der vorhergehenden Ansprüche, **dadurch gekennzeichnet, dass** die Entnahme von Material durch Mikrosandstrahlen erfolgt.

10. Verfahren zur Herstellung einer Funkvorrichtung geringer Größe (D), das die Herstellung eines Schwingkreises umfasst, **dadurch gekennzeichnet, dass** diese Phase gemäß dem Verfahren einer der vorhergehenden Ansprüche umgesetzt wird.

11. Verfahren zur Herstellung einer Funkvorrichtung geringer Größe nach Anspruch 10, **dadurch gekenn-**

**zeichnet, dass** die Vorrichtung (D) eine kontaktlose Chipkarte ist.

**12.** Verfahren zur Herstellung einer Funkvorrichtung geringer Größe nach Anspruch 10, **dadurch gekennzeichnet, dass** die Vorrichtung (D) ein elektronisches Etikett ist.

**13.** 13. Verfahren zur Massenherstellung einer Funkvorrichtung geringer Größe nach einem der vorhergehenden Ansprüche 11 oder 12, **dadurch gekennzeichnet, dass** es eine Testphase umfasst, die darin besteht, eine oder mehrere Messungen der abgestimmten Frequenz des Schwingkreises pro Fertigungslos vorzunehmen, um die für das Einsetzen in die Vorrichtung erforderliche Einstellung zu bestimmen.

FIG_1

FIG_2

FIG_3

## FIG_4

LO

$(CO-c).(LO+\ell)$

A1

A2

CH

Z

S

D

LO

## FIG_5

LO

$(CO+c).(LO+\ell)$

A1

A2

CH

A

S

D